# EUROPÄISCHE PATENTSCHRIFT

(11) **EP 2 401 585 B1**
(45) Veröffentlichungstag und Bekanntmachung des Hinweises auf die Patenterteilung: **15.01.2014**
(21) Anmeldenummer: 09763949.6
(22) Anmeldetag: 01.12.2009
(51) Int. Cl.: G01D 5/347, G01D 5/244

(54) **BAUEINHEIT FÜR EINE WINKELMESSEINRICHTUNG UND ENTSPRECHENDE WINKELMESSEINRICHTUNG**
ASSEMBLY FOR ANGLE MEASURING APPARATUS AND CORRESPONDING ANGLE MEASURING APPARATUS
ÉLÉMENT DE CONSTRUCTION POUR DISPOSITIF DE MESURE D'ANGLE ET DISPOSITIF DE MESURE D'ANGLE CORRESPONDANT

(30) Priorität: 27.02.2009 DE 102009001212
(43) Veröffentlichungstag der Anmeldung: 04.01.2012
(73) Patentinhaber: Dr. Johannes Heidenhain GmbH, 83301 Traunreut (DE)
(72) Erfinder: MITTERREITER, Johann, 83339 Chieming (DE); MARIC, Zlatko, 83278 Traunstein (DE); BARTLECHNER, Alois, 83349 Palling (DE)
(86) Internationale Anmeldenummer: PCT/EP2009/066145
(87) Internationale Veröffentlichungsnummer: WO 2010/097130

(56) Entgegenhaltungen:
- JP-A- 2000 329 586
- JP-A- 2007 240 375

## Beschreibung

Die Erfindung betrifft eine Baueinheit für eine Winkelmesseinrichtung, umfassend ein Trägerelement und eine darauf befestigte Teilungsscheibe gemäß dem Anspruch 1, sowie eine Winkelmesseinrichtung mit zwei relativ zueinander drehbaren Bauteilen gemäß dem Anspruch 7.

Derartige Winkelmesseinrichtungen dienen zur Messung von Drehbewegungen einer Welle über eine oder mehrere Umdrehungen. Die Drehbewegung wird dabei entweder inkremental oder absolut erfasst, der ausgegebene Messwert ist abhängig davon eine Folge von Zählimpulsen ein Zählerwert oder ein Codewort. In Verbindung mit Zahnstangen oder Gewindespindeln lassen sich mit derartigen Winkelmesseinrichtungen auch lineare Bewegungen messen. Winkelmesseinrichtungen werden insbesondere bei Werkzeugmaschinen beziehungsweise Bearbeitungszentren sowohl für die Messung von linearen als auch rotatorischen Bewegungen eingesetzt. Die Bestimmung der Drehwinkel auf nur wenige Winkelsekunden genau ist beispielsweise für Rundtische oder Schwenkköpfe von Werkzeugmaschinen, C-Achsen von Drehmaschinen aber auch bei Druckwerken von Druckmaschinen von entscheidender Bedeutung. Da bei Verwendung von optischen Messprinzipien überaus genaue Messergebnisse erreichbar sind, werden derartige Winkelmesseinrichtungen regelmäßig mit einem optischen Mess-system ausgestattet. Dabei kommen meist transparente Teilungsscheiben, auf denen eine Winkelteilung bzw. -skalierung aufgebracht ist zum Einsatz. Die Teilungsscheiben müssen im Sinne eines genauen Messergebnisses exakt auf dem zu messenden Bauteil befestigt sein. Thermische Einflüsse können in diesem Zusammenhang Probleme bereiten.

Aus der Offenlegungsschrift JP 2000-329586 A2 ist eine Winkelmesseinrichtung bekannt mit einer Klebeverbindung, die in einem axialen Klebespalt eine hohe Elastizität aufweist, so dass Spannungen, welche von thermischen Ausdehnungseffekten herrühren, absorbiert werden können. Auf diese Weise sollen Verformungen der Teilungsscheibe verhindert werden.

Weiterhin wird in der Offenlegungsschrift JP 2007-240375 A eine Winkelmesseinrichtung offenbart, welche eine auf eine Welle aufgesteckte Teilungsscheibe umfasst. Durch eine axiale Klebeverbindung und unter Mitwirkung eines Schrumpfschlauches ist dort die Teilungsscheibe an der Welle befestigt.

Die Verwendung von derartig weichen Klebstoffen mit geringem E-Modul hat aber den Nachteil, dass für überaus exakte Messungen eine präzise Festlegung der Teilungsscheibe dauerhaft nicht zuverlässig gewährleistet ist.

Der Erfindung liegt die Aufgabe zu Grunde, eine Baueinheit für eine Winkelmesseinrichtung bzw. eine Winkelmesseinrichtung der eingangs genannten Art zu schaffen, die überaus robust ist und die dauerhaft präzise Messergebnisse liefert.

Diese Aufgabe wird erfindungsgemäß durch die Schaffung einer Baueinheit für eine Winkelmesseinrichtung bzw. einer Winkelmesseinrichtung mit den Merkmalen des Patentanspruchs 1 bzw. 7 gelöst.

Entsprechend umfasst die Baueinheit für eine Winkelmesseinrichtung eine Teilungsscheibe und ein Trägerelement. Die Teilungsscheibe ist aus einem ersten Werkstoff mit einem ersten Längenausdehnungskoeffizienten gefertigt und das Trägerelement aus einem zweiten Werkstoff mit einem zweiten Längenausdehnungskoeffizienten. Der zweite Längenausdehnungskoeffizient des Werkstoffes des Trägerelements unterscheidet sich vom ersten Längenausdehnungskoeffizienten des Werkstoffs der Teilungsscheibe in vergleichsweise großem Maße, so dass die Differenz zwischen dem zweiten Längenausdehnungskoeffizienten und dem ersten Längenausdehnungskoeffizient mindestens 3·10⁻⁶·K⁻¹ beträgt. Die Teilungsscheibe ist auf dem Trägerelement mittels einer Klebeverbindung befestigt. Die Klebeverbindung weist eine axiale Kleberschicht und eine radiale Kleberschicht auf, wobei die axiale Kleberschicht in einem axialen Spalt und die radiale Kleberschicht in einem radialen Spalt angeordnet sind. Der axiale Spalt und der radiale Spalt befinden sich dabei jeweils zwischen dem Trägerelement und der Teilungsscheibe. Die beiden Kleberschichten umfassen unterschiedliche Klebstoffe. Mit anderen Worten, bestehen also die Kleberschichten aus unterschiedlichen Klebstoffen. Die Attribute axial und radial im Hinblick auf die Spalten beziehen sich auf die geometrische Rotationsachse der Teilungsscheibe. So sind in der Regel Striche einer Winkelskalierung auf der Teilungsscheibe radial orientiert, entsprechend ist dann die axiale Richtung orthogonal zu diesen Strichen ausgerichtet.

Es hat sich gezeigt, dass eine dauerhafte und im Hinblick auf den Messbetrieb präzise Verbindung der Teilungsscheibe am Trägerelement bei einer Differenz zwischen dem zweiten Längenausdehnungskoeffizienten und dem ersten Längenausdehnungskoeffizient von mehr als 3.10⁻⁶·K⁻¹ mit herkömmlichen Klebeverbindungen nicht mehr gewährleistet ist.

Als Teilungsscheibe ist beispielsweise ein ringförmiger Körper oder ein Körper in Ring- oder Kreissegmentgeometrie zu verstehen, welcher mit einer Winkelteilung bzw. Winkelskalierung versehen ist. Die Begriffe axial und radial sind bei bezüglich einer Ringform abgewandelten Formen sinngemäß anzuwenden.

Insbesondere weist die Erfindung Vorteile auf, wenn die Differenz zwischen dem zweiten Längenausdehnungskoeffizient des Werkstoffes des Träger-elements und dem ersten Längenausdehnungskoeffizient des Werkstoffes der Teilungsscheibe mindestens 4·10⁻⁶·K⁻¹, insbesondere mehr als 6·10⁻⁶·K⁻¹, beträgt. I m Übrigen ist im Folgenden als Längenausdehnungskoeffzient insbesondere der mittlere thermische Längenausdehnungskoeffizient, gemessen nach DIN ISO 7991, zu verstehen.

Dabei kann der Längenausdehnungskoeffizient des Werkstoffes der Teilungsscheibe kleiner sein als der Längenausdehnungskoeffizient des Werkstoffes des Trägerelements. Insbesondere kann der Längenausdehnungskoeffizient des Werkstoffes der Teilungsscheibe kleiner als 10⁻⁵·K⁻¹, insbesondere kleiner als 5·10⁻⁶·K⁻¹ oder kleiner als 4.10⁻⁶ K⁻¹ sein.

In einer weiteren Ausgestaltung der Erfindung ist die Klebeverbindung derart ausgestaltet, dass jeweils im ausgehärteten Zustand und im Normzustand nach DIN 1343 der E-Modul der axialen Kleberschicht kleiner ist als der E-Modul der radialen Kleberschicht.

Die Breite des radialen Spalts der radialen Kleberschicht ist mit Vorteil gröβer als die Breite des axialen Spalts der axialen Kleberschicht.

In weiterer Ausgestaltung der Erfindung kann der erste Werkstoff, aus dem die Teilungsscheibe gefertigt ist, ein Glas- oder Glaskeramikwerkstoff sein, wogegen der zweite Werkstoff, aus dem das Trägerelement gefertigt ist, zur Gruppe der Metallwerkstoffe gehört. In einer bevorzugten Ausführungsvariante kann ein Borosilikatglas nach DIN ISO 3585, ein Aluminiumsilicatglas oder Boro-Aluminiumsilicatglas als Werkstoff der Teilungsscheibe eingesetzt werden. Der zweite Werkstoff, aus welchem das Trägerelement hergestellt ist, kann eine Stahllegierung mit einem zweiten Längenausdehnungskoeffizienten größer als 6·10⁻⁶·K⁻¹ oder größer als 7·10⁻⁶ K⁻¹ umfassen.

Die Baueinheit für eine Winkelmesseinrichtung kann derart konfiguriert sein, dass das Trägerelement als eine Welle ausgestaltet ist, welche einen Absatz aufweist, und die axiale Kleberschicht in einem axialen Spalt zwischen dem Absatz und der Teilungsscheibe angeordnet ist. Insbesondere kann mit Vorteil das Trägerelement als eine Hohlwelle ausgestaltet sein.

Gemäß einem weiteren Aspekt umfasst die Erfindung eine Winkelmesseinrichtung mit einem ersten Bauteil und einem zweiten Bauteil, wobei die Bauteile relativ zueinander um eine Achse drehbar sind. Dabei ist dem ersten Bauteil eine Baueinheit, die eine Teilungsscheibe und ein Trägerelement umfasst, zugeordnet. Auf dem Trägerelement ist die Teilungsscheibe mittels einer Klebeverbindung befestigt. Dem zweiten Bauteil ist eine Abtasteinheit zum Abtasten der Teilungsscheibe zugeordnet. Die Teilungsscheibe ist aus einem ersten Werkstoff mit einem ersten Längenausdehnungskoeffizienten gefertigt und das Trägerelement aus einem zweiten Werkstoff mit einem zweiten Längenausdehnungskoeffizienten. Die Differenz zwischen dem zweiten Längenausdehnungskoeffizienten und dem ersten Längenausdehnungskoeffizienten beträgt mindestens 3·10⁻⁶·K⁻¹. Die Klebeverbindung weist eine axiale Kleberschicht und eine radiale Kleberschicht auf, wobei die axiale Kleberschicht in einem axialen Spalt und die radiale Kleberschicht in einem radialen Spalt jeweils zwischen dem Trägerelement und der Teilungsscheibe angeordnet ist. Die beiden Kleberschichten umfassen unterschiedliche Klebstoffe.

Mit Vorteil ist die Winkelmesseinrichtung so konfiguriert, dass am zweiten Bauteil eine Abtastplatine angeordnet ist, auf welcher ein Sensorelement mit einer integrierten Schaltung montiert ist. Das Sensorelement mit der integrierten Schaltung ist dabei in einem axialen Abstand zur Teilungsscheibe von weniger als 1 mm, insbesondere von weniger als 0,5 mm, mit Vorteil weniger als 0,25 mm angeordnet.

In vorteilhafter Weise umfasst die Winkelmesseinrichtung einen Aufbau, bei dem am zweiten Bauteil eine Lichtquelle angeordnet ist, wobei die Teilungsscheibe zwischen der Lichtquelle und dem Sensorelement mit der integrierten Schaltung angeordnet ist. Entsprechend arbeitet eine derart ausgestaltetet Winkelmesseinrichtung nach einem Durchlichtprinzip.

Mit Vorteil weist das Sensorelement neben der integrierten Schaltung zusätzlich auch Fotoelemente auf. Ein derartiges Sensorelement kann auch als so genannter Opto-ASIC (ASIC = Application Specific Integrated Circuit) bezeichnet werden, welcher eine Reihe von Fotoelementen und eine anwendungsspezifische integrierte Schaltung zur Auswertung der von den Fotoelementen erzeugten elektrischen Signale aufweist.

Die Winkelmesseinrichtung kann im Übrigen eine Baueinheit umfassen, die selektiv Merkmale aufweist, wie sie in der Beschreibung möglicher Ausführungsformen der Baueinheit dargelegt wurden.

Zusätzliche vorteilhafte Ausgestaltungen der Erfindung sind den abhängigen Ansprüchen zu entnehmen.

Weitere Merkmale und Vorteile der Erfindung werden bei der nachfolgenden Beschreibung zweier Ausführungsbeispiele anhand der Figuren deutlich werden.

Es zeigen die:
- Figur 1: eine Teil-Schnittdarstellung durch eine Winkelmesseinrichtung,
- Figur 2: eine Detailansicht einer Baueinheit der Winkelmesseinrichtung,
- Figur 3: eine Detailansicht einer Baueinheit der Winkelmesseinrichtung, gemäß einem weiteren Ausführungsbeispiel.

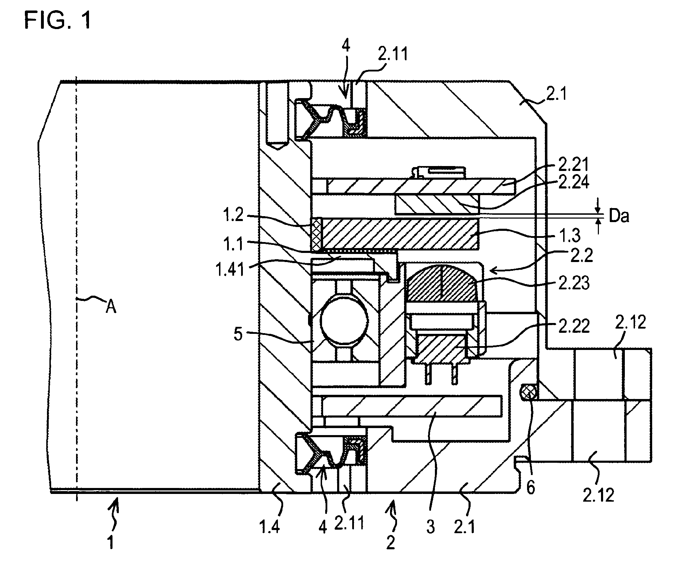

In der Figur 1 ist ein Teil-Längsschnitt durch eine Winkelmesseinrichtung dargestellt. Die Winkelmesseinrichtung umfasst ein erstes Bauteil, das im vorgestellten Ausführungsbeispiel als Rotor 1 bezeichnet werden kann. Der Rotor 1 ist um eine Achse A relativ zu einem zweiten Bauteil drehbar, wobei das zweite Bauteil hier als Stator 2 ausgestaltet ist.

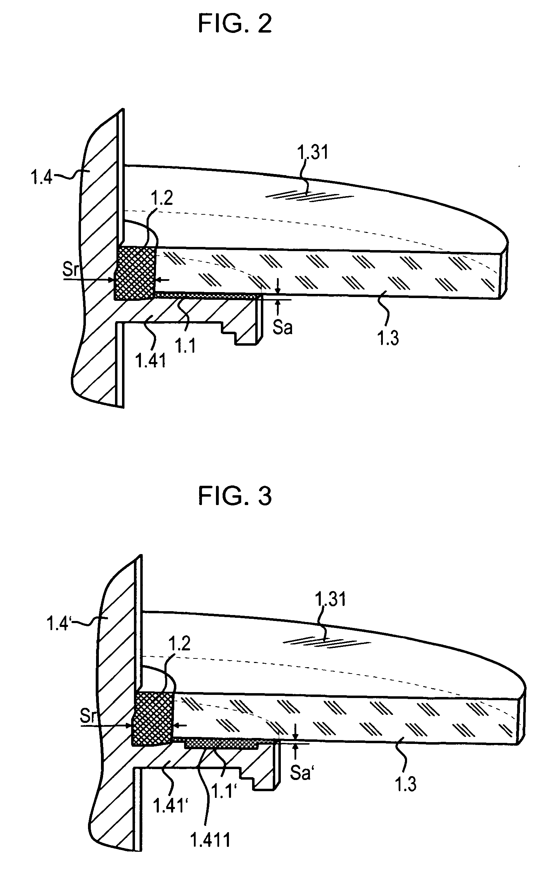

Eine Baueinheit der Winkelmesseinrichtung, siehe auch die Figur 2, umfasst ein Trägerelement 1.4, hier als eine Hohlwelle ausgebildet, mit einem Absatz 1.41, deren hohlzylindrischer Innenraum zur drehfesten Aufnahme einer zu messende Welle vorgesehen ist. Am Rotor 1, bzw. am Trägerelement 1.4, ist weiterhin eine Teilungsscheibe 1.3, auf der eine Winkelskalierung 1.31 aufgebracht ist, mittels einer Klebeverbindung befestigt. Die Teilungsscheibe 1.3 ist aus einem Glaswerkstoff mit einem ersten Längenausdehnungskoeffizienten α1.3 gefertigt. Die Achse A stellt gleichzeitig die geometrische Rotationsachse der Teilungsscheibe 1.3 dar. Am Trägerelement 1.4, welches aus hartem Stahl mit einem zweiten Längenausdehnungskoeffizienten α1.4 gefertigt ist, ist überdies ein Innenring eines Wälzlagers 5 befestigt. Die Baueinheit der Winkelmesseinrichtung ist demzufolge dem ersten Bauteil der Winkelmesseinrichtung, also dem Rotor 1, zugeordnet.

In der Figur 2 ist im Übrigen die Winkelskalierung 1.31 der Übersichtlichkeit halber nur in einem kleinen Teilbereich dargestellt. Üblicherweise ist die Winkelskalierung 1.31 über einen um 360° umlaufenden Bereich angeordnet. Die Winkelskalierung 1.31 kann als eine inkrementale Winkelteilung oder als eine absolute Winkelcodierung ausgestaltet sein.

Der Stator 2 umfasst ein Gehäuse 2.1, das aus zwei Teilen besteht, wobei beide Teile stirnseitig Rillen bzw. Kanäle 2.11 aufweisen. Durch Bohrungen 2.12 werden die beiden Teile des Gehäuses 2.1 starr miteinander verschraubt, wobei ein O-Ring 6 für die Abdichtung der Fügefläche vorgesehen ist. Das Gehäuse 2.1 wird in der Regel für den Messbetrieb an einem Maschinenteil starr fixiert.

Im Gehäuse 2.1 befindet sich eine so genannte Abtasteinheit 2.2, welche eine LED 2.22, einen Kondensor 2.23, ein Sensorelement 2.24 mit einer integrierten Schaltung und eine Abtastplatine 2.21 umfasst. Das Sensorelement 2.24 mit der integrierten Schaltung ist entsprechend auf der Abtastplatine 2.21 elektrisch montiert. Zwischen dem Sensorelement 2.24 mit der integrierten Schaltung, hier ein so genannter Opto-ASIC, und der Teilungsscheibe 1.3 befindet sich ein vergleichsweise geringer Luftspalt, so dass der axiale Abstand Da zwischen dem Sensorelement 2.24 und der Teilungsscheibe 1.3 nur wenige 100 µm betragen kann. Die als Lichtquelle dienende LED 2.22 sendet Licht durch einen Kondensor 2.23 und danach durch die Teilungsscheibe 1.3. Die LED 2.22, der Kondensor 2.23 und das Sensorelement 2.24 mit der integrierten Schaltung sind dabei dem Stator 2, also dem zweiten Bauteil der Winkelmesseinrichtung zugeordnet. Dagegen ist die Teilungsscheibe 1.3, wie bereits erwähnt, am drehbaren Trägerelement 1.4 befestigt. Die Teilungsscheibe 1.3, welche also zwischen der Lichtquelle 2.22 und dem Sensorelement 2.24 angeordnet ist, vermag durch ihre Winkelskalierung 1.31 das eingestrahlte Licht entsprechend der Winkelstellung des Trägerelements 1.4 zu modulieren. Das modulierte Licht trifft schließlich auf Fotodetektoren des Sensorelements 2.24. Durch diese Abtastung entstehen fotoelektrische Signale, welche die Information über die Winkelstellung des Trägerelements 1.4 enthalten. Die fotoelektrisch erzeugten Signale werden durch eine integrierte Schaltung des Sensorelements 2.24 weiterverarbeitet. Die weiterverarbeiteten Positionssignale werden schließlich über ein Kabel an ein weiteres Gerät ausgegeben, z. B. an eine Steuerungseinrichtung einer Maschine.

Mit dem Gehäuse 2.1 ist ein Teil einer Kupplung 3 durch eine Schraubverbindung fest verbunden. Weiterhin ist ein anderer Teil der Kupplung 3 auch an der Abtasteinheit 2.2 festgelegt. Der Außenring des Wälzlagers 5 ist ebenfalls an der Abtasteinheit 2.2 fixiert. In der Praxis sind die zu messende Welle und das Maschinenteil, an dem das Gehäuse 2.1 starr montiert ist, nicht exakt zueinander ausgerichtet. Unter Verwendung der Kupplung 3 kann eine zu messende Welle starr und drehfest das Trägerelement 1.4 der Winkelmesseinrichtung montiert werden, während das Gehäuse 2.1 fest an dem Maschinenteil angebaut werden kann. Zur Abdichtung der ringförmigen Spalte ist jeweils eine Dichtung 4 vorgesehen.

Während des Betriebs des Sensorelements 2.24 mit einer leistungsfähigen integrierten Schaltung muss mit einer nicht zu vernachlässigenden lokalen Wärmeentwicklung gerechnet werden. Für den Fall, dass sich die Teilungsscheibe 1.3 im Stillstand befindet und das Sensorelement 2.24 mit der integrierten Schaltung bestromt wird, kann es über den engen Luftspalt, bzw. durch den geringen Abstand Da, zwischen dem Sensorelements 2.24 und der Teilungsscheibe 1.3 zu einem merklichen lokalen Wärmeeintrag in die Teilungsscheibe 1.3 kommen. Bei Verwendung von herkömmlichem Glas als Werkstoff für die Teilungsscheibe 1.3 würde dies zu einer lokalen Deformation der Winkelskalierung 1.31 auf der Teilungsscheibe 1.3 führen, infolge des vergleichsweise hohen Längenausdehnungskoeffizienten bei jenem Material. Zur Vermeidung dieses Nachteils wurde nun ein spezieller transparenter Glaswerkstoff für die Teilungsscheibe 1.3 ausgewählt, welcher den ersten Längenausdehnungskoeffizienten α1.3 von nur 3,25·10⁻⁶·K⁻¹ (gemäß ISO 7991) aufweist. Dadurch, dass das Trägerelement 1.4 aus einem Stahl mit dem zweiten Längenausdehnungskoeffizienten α1.4 von etwa 8·10⁻⁶·K⁻¹ gefertigt ist, unterscheidet sich dieser erheblich vom ersten Längenausdehnungskoeffizienten α1.3 der Teilungsscheibe 1.3. Die Differenz zwischen dem zweiten Längenausdehnungskoeffizienten α1.4 und dem ersten Längenausdehnungskoeffizienten α1.3 beträgt also hier 4,75·10⁻⁶·K⁻¹ (α1.4 - α1.3 = 4,75·10⁻⁶·K⁻¹).

Mit der Verwendung des oben beschriebenen Glaswerkstoffs konnten Verformungen der Teilungsscheibe 1.3 durch den Wärmeeintrag des Sensorelements 2.24 mit der leistungsfähigen integrierten Schaltung signifikant reduziert werden. In der Folge zeigte es sich jedoch, dass die herkömmlichen Klebeverbindungen, welche einen ringförmigen axialen Klebespalt aufwiesen, auf Dauer nicht hielten bzw., dass unzulässig große Exzentrizitäten der Teilungsscheibe 1.3 nach längerem Betrieb auftraten.

Im Zuge der Montage der Baueinheit, welche das Trägerelement 1.4 und die Teilungsscheibe 1.3 umfasst, wird nunmehr zunächst ein erster Klebstoff, im vorgestellten Ausführungsbeispiel ein vergleichsweise dünnflüssiger Klebstoff axial auf den Absatz 1.41 des Trägerelements 1.4 aufgetragen.

Danach wird eine sehr exakte Positionierung der Teilungsscheibe 1.3 auf dem Trägerelement 1.4 vorgenommen, so dass die Exzentrizität der Teilungsscheibe 1.3 relativ zur Achse A des Trägerelements 1.4 unterhalb einer vorgegebenen Toleranzschwelle liegt. Sobald diese Positionierung abgeschlossen ist, kann der erste Klebstoff mit UV-Licht bestrahlt werden, was eine Härtung des ersten Klebstoffs zur Folge hat. Auf diese Weise entsteht eine axiale Kleberschicht 1.1 in einem axialen Spalt Sa zwischen dem Absatz und der Teilungsscheibe 1.3. Somit ist die Teilungsscheibe 1.3 in exakter Position am Trägerelement 1.4 fixiert.

Zur Herstellung einer überaus belastbaren Klebeverbindung wird nun eine radiale Kleberschicht 1.2 hergestellt, aus einem Klebstoff, der sich vom Klebstoff der axialen Kleberschicht 1.2 unterscheidet. Zunächst wird zu diesem Zweck der zweite Klebstoff in den umlaufenden radialen Spalt Sr zwischen der Teilungsscheibe 1.3 und dem Trägerelement 1.4 eingeführt. Im Anschluss daran wird eine Aushärtung des zweiten Klebstoffs durch UV-Licht vorgenommen, so dass eine radiale Kleberschicht 1.2 entsteht. In diesem Stadium ist dann das Klebefügen der Baueinheit abgeschlossen.

Die beiden Kleberschichten 1.1, 1.2 der Baueinheit sind so hergestellt, dass jeweils im ausgehärteten Zustand der E-Modul E1 der axialen Kleberschicht 1.1 kleiner ist als der E-Modul E2 der radialen Kleberschicht 1.2.

Gemäß einem zweiten Ausführungsbeispiel (Figur 3) liegt ein modifiziertes Trägerelement 1.4' vor mit einem Absatz 1.41 der eine umlaufende Tasche 1.411 aufweist. Die Tasche 1.411 wird durch den ersten Klebstoff ausgefüllt, so dass dort eine vergleichsweise dicke axiale Kleberschicht 1.1 vorliegt. Die axiale Kleberschicht 1.1' erstreckt sich auch in radial benachbarte Bereiche des Absatzes 1.41', sowohl nach innen hin als auch nach außen. In diesen Bereichen ist der axiale Spalt Sa' extrem klein, so dass die Teilungsscheibe 1.3 in einer Ebene platziert werden kann, die mit hoher Genauigkeit parallel zur Ebene des Absatzes 1.41' orientiert ist. Auf diese Weise sind im Ergebnis Taumelbewegungen der Teilungsscheibe 1.3 im Betrieb der Winkelmesseinrichtung vernachlässigbar klein. Alternativ oder ergänzend zu einer umlaufende Tasche 1.411 können auch z. B. Rillen in den Absatz 1.41' eingearbeitet sein.

Im Übrigen können im zweiten Ausführungsbeispiel die gleichen Klebstoffe verwendet werden, wie im ersten Ausführungsbeispiel. Demnach sind auch hier die beiden Kleberschichten 1.1', 1.2 der Baueinheit so hergestellt, dass jeweils im ausgehärteten Zustand der E-Modul E1 der axialen Kleberschicht 1.1 kleiner ist als der E-Modul E2 der radialen Kleberschicht 1.2.

Die axialen und radialen Spalte Sa, Sa', Sr, sind in den Figuren nicht maßstäblich dargestellt. Insbesondere können die axialen Spalte Sa, Sa' in der Realität wesentlich kleiner ausgestaltet sein, so dass also in den Figuren die axialen Spalte Sa, Sa' übertrieben groß gezeigt sind, um die Ausführungsbeispiele besser erläutern zu können.

## Patentansprüche

1. Baueinheit für eine Winkelmesseinrichtung, umfassend
eine Teilungsscheibe (1.3), welche aus einem ersten Werkstoff mit einem ersten Längenausdehnungskoeffizienten (α1.3) gefertigt ist, sowie
ein Trägerelement (1.4, 1.4'), welches aus einem zweiten Werkstoff mit einem zweiten Längenausdehnungskoeffizienten (α1.4) gefertigt ist, wobei
die Differenz zwischen dem zweiten Längenausdehnungskoeffizienten (α1.4) und dem ersten Längenausdehnungskoeffizienten (α1.3) mindestens 3·10⁻⁶·K⁻¹ beträgt, und
die Teilungsscheibe (1.3) auf dem Trägerelement (1.4, 1.4') mittels einer Klebeverbindung befestigt ist, wobei
die Klebeverbindung eine axiale Kleberschicht (1.1, 1.1') und eine radiale Kleberschicht (1.2) aufweist, und
· die axiale Kleberschicht (1.1, 1.1') in einem axialen Spalt (Sa, Sa'.),
· die radiale Kleberschicht (1.2) in einem radialen Spalt (Sr) jeweils zwischen dem Trägerelement (1.4, 1.4') und der Teilungsscheibe (1.3) angeordnet ist und die beiden Kleberschichten (1.1, 1.1 1.2) unterschiedliche Klebstoffe umfassen.

2. Baueinheit für eine Winkelmesseinrichtung gemäß dem Anspruch 1, wobei der erste Längenausdehnungskoeffizient (α1.3) des Werkstoffes der Teilungsscheibe (1.3) kleiner ist als der zweite Längenausdehnungskoeffizient (α1.4) des Werkstoffes des Trägerelements (1.4, 1.4').

3. Baueinheit für eine Winkelmesseinrichtung gemäß dem Anspruch 2, wobei der erste Längenausdehnungskoeffizient (α1.3) des Werkstoffes der Teilungsscheibe (1.3) kleiner als 5·10⁻⁶·K⁻¹ ist.

4. Baueinheit für eine Winkelmesseinrichtung gemäß einem der vorhergehenden Ansprüche, wobei jeweils im ausgehärteten Zustand der E-Modul (E1) der axialen Kleberschicht (1.1, 1.1') kleiner ist als der E-Modul (E2) der radialen Kleberschicht (1.2).

5. Baueinheit für eine Winkelmesseinrichtung gemäß einem der vorhergehenden Ansprüche, wobei der erste Werkstoff, aus dem die Teilungsscheibe (1.3) gefertigt ist, ein Glas- oder Glaskeramikwerkstoff ist und der zweite Werkstoff, aus dem das Trägerelement (1.4, 1.4') gefertigt ist, ein Metallwerkstoff ist.

6. Baueinheit für eine Winkelmesseinrichtung gemäß einem der vorhergehenden Ansprüche, wobei das Trägerelement (1.4, 1.4') als eine Welle ausgestaltet ist, welche einen Absatz (1.41, 1.41') aufweist, und die axiale Kleberschicht (1.1, 1.1') in einem axialen Spalt (Sa, Sa') zwischen dem Absatz (1.41, 1.41') und der Teilungsscheibe (1.3) angeordnet ist.

7. Winkelmesseinrichtung mit einem ersten Bauteil (1) und einem zweiten Bauteil (2), wobei die Bauteile (1, 2) relativ zueinander um eine Achse (A) drehbar sind, wobei
· dem ersten Bauteil (1) eine Baueinheit, umfassend eine Teilungsscheibe (1.3) und ein Trägerelement (1.4, 1.4'), zugeordnet ist, wobei auf dem Trägerelement (1.4, 1.4') mittels einer Klebeverbindung die Teilungsscheibe (1.3) befestigt ist,
· dem zweiten Bauteil (2) eine Abtasteinheit (2.2) zum Abtasten der Teilungsscheibe (1.3) zugeordnet ist, und
die Teilungsscheibe (1.3) aus einem ersten Werkstoff mit einem ersten Längenausdehnungskoeffizienten (α1.3) und das Trägerelement (1.4, 1.4') aus einem zweiten Werkstoff mit einem zweiten Längenausdehnungskoeffizienten (α1.4) gefertigt sind, wobei
die Differenz zwischen dem zweiten Längenausdehnungskoeffizienten (α1.4) und dem ersten Längenausdehnungskoeffizienten (α1.3) mindestens 3·10⁻⁶·K⁻¹ beträgt, wobei
die Klebeverbindung eine axiale Kleberschicht (1.1, 1.1') und eine radiale Kleberschicht (1.2) aufweist, und
· die axiale Kleberschicht (1.1, 1.1') in einem axialen Spalt (Sa, Sa'),
· die radiale Kleberschicht (1.2) in einem radialen Spalt (Sr) jeweils zwischen dem Trägerelement (1.4, 1.4') und der Teilungsscheibe (1.3) angeordnet ist und die beiden Kleberschichten (1.1, 1.1'; 1.2) unterschiedliche Klebstoffe umfassen.

8. Winkelmesseinrichtung gemäß dem Anspruch 7, wobei am zweiten Bauteil (2) eine Abtastplatine (2.21) angeordnet ist, auf welcher ein Sensorelement (2.24) mit einer integrierten Schaltung montiert ist und das Sensorelement (2.24) mit der integrierten Schaltung in einem Abstand (Da) von weniger als 1 mm zur Teilungsscheibe (1.3) angeordnet ist.

9. Winkelmesseinrichtung gemäß dem Anspruch 8, wobei am zweiten Bauteil (2) eine Lichtquelle (2.22) angeordnet ist und die Teilungsscheibe (1.3) zwischen der Lichtquelle (2.22) und dem Sensorelement (2.24) mit der integrierten Schaltung angeordnet ist.

10. Winkelmesseinrichtung gemäß dem Anspruch 8 oder 9, wobei das Sensorelement (2.24) neben der integrierten Schaltung auch Fotoelemente aufweist.

## Claims

1. Assembly for an angle measuring apparatus, comprising
a graduated disc (1.3), which is produced from a first material, with a first coefficient of linear expansion (α1.3), and
· a carrier element (1.4, 1.4'), which is produced from a second material, with a second coefficient of linear expansion (α1.4), wherein
the difference between the second coefficient of linear expansion (α1.4) and the first coefficient of linear expansion (α1.3) is at least 3·10⁻⁶·K⁻¹, and the graduated disc (1.3) is fastened on the carrier element (1.4, 1.4') by means of an adhesive bond, wherein
the adhesive bond has an axial adhesive layer (1.1, 1.1') and a radial adhesive layer (1.2), and
· the axial adhesive layer (1.1, 1.1') is arranged in an axial gap (Sa, Sa'),
the radial adhesive layer (1.2) is arranged in a radial gap (Sr),
in each case between the carrier element (1.4, 1.4') and the graduated disc (1.3), and the two adhesive layers (1.1, 1.1'; 1.2) comprise different adhesives.

2. Assembly for an angle measuring apparatus according to Claim 1, wherein the first coefficient of linear expansion (α1.3) of the material of the graduated disc (1.3) is less than the second coefficient of linear expansion (α1.4) of the material of the carrier element (1.4, 1.4').

3. Assembly for an angle measuring apparatus according to Claim 2, wherein the first coefficient of linear expansion (α1.3) of the material of the graduated disc (1.3) is less than 5·10⁻⁶·K⁻¹.

4. Assembly for an angle measuring apparatus according to one of the preceding claims, wherein the modulus of elasticity (E1) of the axial adhesive layer (1.1, 1.1') is less than the modulus of elasticity (E2) of the radial adhesive layer (1.2), in each case in the cured state.

5. Assembly for an angle measuring apparatus according to one of the preceding claims, wherein the first material, from which the graduated disc (1.3) is produced, is a glass or glass-ceramic material and the second material, from which the carrier element (1.4, 1.4') is produced, is a metal material.

6. Assembly for an angle measuring apparatus according to one of the preceding claims, wherein the carrier element (1.4, 1.4') is designed as a shaft, which has a shoulder (1.41, 1.41'), and the axial adhesive layer (1.1, 1.1') is arranged in an axial gap (Sa, Sa') between the shoulder (1.41, 1.41') and the graduated disc (1.3).

7. Angle measuring apparatus comprising a first component (1) and a second component (2), wherein the components (1, 2) are rotatable in relation to one another about an axis (A), wherein
· the first component (1) is assigned an assembly, comprising a graduated disc (1.3) and a carrier element (1.4, 1.4'), the graduated disc (1.3) being fastened on the carrier element (1.4, 1.4') by means of an adhesive bond,
· the second component (2) is assigned a scanning unit (2.2) for scanning the graduated disc (1.3), and
the graduated disc (1.3) is produced from a first material, with a first coefficient of linear expansion (α1.3), and the carrier element (1.4, 1.4') is produced from a second material, with a second coefficient of linear expansion (α1.4), wherein
the difference between the second coefficient of linear expansion (α1.4) and the first coefficient of linear expansion (α1.3) is at least 3·10⁻⁶·K⁻¹, wherein
the adhesive bond has an axial adhesive layer (1.1, 1.1') and a radial adhesive layer (1.2), and
· the axial adhesive layer (1.1, 1.1') is arranged in an axial gap (Sa, Sa'),
· the radial adhesive layer (1.2) is arranged in a radial gap (Sr), in each case between the carrier element (1.4, 1.4') and the graduated disc (1.3), and the two adhesive layers (1.1, 1.1'; 1.2) comprise different adhesives.

8. Angle measuring apparatus according to Claim 7, wherein a scanning board (2.21), on which a sensor element (2.24) with an integrated circuit is mounted and the sensor element (2.24) with the integrated circuit is arranged at a distance (Da) of less than 1 mm from the graduated disc (1.3), is arranged on the second component (2).

9. Angle measuring apparatus according to Claim 8, wherein a light source (2.22) is arranged on the second component (2) and the graduated disc (1.3) is arranged between the light source (2.22) and the sensor element (2.24) with the integrated circuit.

10. Angle measuring apparatus according to Claim 8 or 9, wherein, apart from the integrated circuit, the sensor element (2.24) also has photo elements.

## Revendications

1. Module pour dispositif de mesure d'angle, le module comprenant :
une plaque de division (1.3) réalisée en un premier matériau qui présente un premier coefficient de dilatation longitudinale (α1.3) et
un élément de support (1.4, 1.4') constitué d'un deuxième matériau présentant un deuxième coefficient de dilatation longitudinale (α1.4),
la différence entre le deuxième coefficient de dilatation longitudinale (α.4) et le premier coefficient de dilatation longitudinale (α.3) valant au moins 3·10⁻⁶·K⁻¹ et
la plaque de division (1.3) étant fixée sur l'élément de support (1.4, 1.4') au moyen d'une liaison collée,
la liaison collée présentant une couche axiale d'adhésif (1.1, 1.1') et une couche radiale d'adhésif (1.2) et
la couche axiale d'adhésif (1.1, 1.1') étant disposée dans un interstice axial (Sa, Sa'), la couche radiale d'adhésif (1.2) étant disposée dans un interstice radial (Sr), chaque fois entre l'élément de support (1.4, 1.4') et la plaque de division (1.3), les deux couches d'adhésif (1.1, 1.1'; 1.2) comportant des adhésifs différents.

2. Module pour dispositif de mesure d'angle selon la revendication 1, dans lequel le premier coefficient de dilatation longitudinale (α1.3) du matériau de la plaque de division (1.3) est plus petit que le deuxième coefficient de dilatation longitudinale (α1.4) du matériau de l'élément de support (1.4, 1.4').

3. Module pour dispositif de mesure d'angle selon la revendication 2, dans lequel le premier coefficient de dilatation longitudinale (α1.3) du matériau de la plaque de division (1.3) est inférieur à 5.10⁻⁶.K⁻¹.

4. Module pour dispositif de mesure d'angle selon l'une des revendications précédentes, dans lequel à l'état durci, le module E (E1) de la couche axiale d'adhésif (1.1, 1.1') est inférieur au module E (E2) de la couche radiale d'adhésif (1.2).

5. Module pour dispositif de mesure d'angle selon l'une des revendications précédentes, dans lequel le premier matériau en lequel la plaque de division (1.3) est réalisée est un matériau vitreux ou une vitrocéramique et le deuxième matériau en lequel l'élément de support (1.4, 1.4') est réalisé est un matériau métallique.

6. Module pour dispositif de mesure d'angle selon l'une des revendications précédentes, dans lequel l'élément de support (1.4, 1.4') est configuré en ondulation qui présente un retrait (1.41, 1.41') et dans lequel la couche axiale d'adhésif (1.1, 1.1') est disposée dans un interstice axial (Sa, Sa') entre le retrait (1.41, 1.41') et la plaque de division (1.3).

7. Dispositif de mesure d'angle qui présente
un premier composant (1) et un deuxième composant (2), les composants (1, 2) pouvant tourner l'un par rapport à l'autre autour d'un axe (A),
un module comprenant une plaque de division (1.3) et un élément de support (1.4, 1.4') associé au premier composant (1), la plaque de division (1.3) étant fixée sur l'élément de support (1.4, 1.4') au moyen d'une liaison collée,
une unité de palpage (2.2) qui palpe la plaque de division (1.3) associée au deuxième composant (2),
la plaque de division (1.3) est réalisée en un premier matériau qui présente un premier coefficient de dilatation longitudinale (α1.3) et l'élément de support (1.4, 1.4') étant réalisé en un deuxième matériau qui présente un deuxième coefficient de dilatation longitudinale (α1.4),
la différence entre le deuxième coefficient de dilatation longitudinale (α1.4) et le premier coefficient de dilatation longitudinale (α1.3) valant au moins 3.10⁻⁶.K⁻¹,
la liaison collée présentant une couche axiale d'adhésif (1.1, 1.1') et une couche radiale d'adhésif (1.2) et
la couche axiale d'adhésif (1.1, 1.1') étant disposée dans un interstice axial (Sa, Sa'), la couche radiale d'adhésif (1.2) étant disposée dans un interstice radial (Sr), chaque fois entre l'élément de support (1.4, 1.4') et la plaque de division (1.3), les deux couches d'adhésif (1.1, 1.1'; 1.2) comportant des adhésifs différents.

8. Module pour dispositif de mesure d'angle selon la revendication 7, dans lequel une plaque de palpage (2.21) sur laquelle un élément de capteur (2.24) doté d'un circuit intégré est monté est disposée sur le deuxième composant (2), l'élément de capteur (2.24) doté d'un circuit intégré étant disposé à une distance (Da) de la plaque de division (1.3) inférieure à 1 mm.

9. Module pour dispositif de mesure d'angle selon la revendication 8, dans lequel une source de lumière (2.22) est disposée sur le deuxième composant (2) et la plaque de division (1.3) est disposée entre la source de lumière (2.22) et l'élément de capteur (2.24) doté d'un circuit intégré.

10. Module pour dispositif de mesure d'angle selon les revendications 8 ou 9, dans lequel l'élément de capteur (2.24) présente également des photoéléments en plus du circuit intégré.
